# EUROPEAN PATENT SPECIFICATION

(11) **EP 4 092 618 B1**
(45) Date of publication and mention of the grant of the patent: **17.07.2024**
(21) Application number: 22198022.0
(22) Date of filing: 27.09.2022
(51) Int. Cl.: G06T 7/12, G06T 7/194, G06T 7/73, G06T 5/77, G06T 11/00

(54) **PICTURE PROCESSING METHOD AND APPARATUS, ELECTRONIC DEVICE AND STORAGE MEDIUM**
BILDVERARBEITUNGSVERFAHREN UND -VORRICHTUNG, ELEKTRONISCHE VORRICHTUNG UND SPEICHERMEDIUM
PROCÉDÉ ET APPAREIL DE TRAITEMENT D'IMAGE, DISPOSITIF ÉLECTRONIQUE ET SUPPORT D'INFORMATIONS

(30) Priority: 12.10.2021 CN 202111189145
(43) Date of publication of application: 23.11.2022
(73) Proprietor: Beijing Baidu Netcom Science Technology Co., Ltd., Beijing 100085 (CN)
(72) Inventor: WEI, Chengdong, Beijing, 100085 (CN)
(74) Representative: Maiwald GmbH

(56) References cited:
- MACHIDA SHIMON ET AL: "PrivacyTag: A Community-Based Method for Protecting Privacy of Photographed Subjects in Online Social Networks", 4 October 2017, 20171004, PAGE(S) 261 - 275, XP047615550
- CAI HUI-LI ET AL: "Beautified QR code with high storage capacity using sequential module modulation", MULTIMEDIA TOOLS AND APPLICATIONS, KLUWER ACADEMIC PUBLISHERS, BOSTON, US, vol. 78, no. 16, 18 April 2019 (2019-04-18), pages 22575 - 22599, XP036854044, ISSN: 1380-7501, [retrieved on 20190418], DOI: 10.1007/S11042-019-7504-9

## Description

### TECHNICAL FIELD

The disclosure relates to a field of artificial intelligence technologies, especially to a field of computer vision technologies, and in particular to a picture processing method, a picture processing apparatus, an electronic device and a storage medium.

### BACKGROUND

Currently, in order to avoid potential security risks caused by quick response (QR) codes, all pictures will be reviewed and pictures containing the QR codes will be deleted.

However, in fact, for most pictures on the Internet, the remaining part of the picture after removing the QR code and the content directed by the AR code may have high use value. If the whole picture is deleted, the picture containing the QR code cannot be transmitted normally, which reduces the user experience.

Machida Shimon et al: PrivacyTag: A Community-Based Method for Protecting Privacy of Photographed Subjects in Online Social Networks, 4 October 2017, Pages 261-275 and Cai Hui-Li et al: Beautified QR code with high storage capacity using sequential module modulation, Multimedia Tools and Applications, Kluwer Academic Publishers, BOSTON, US, vol. 78, no, 16, 18 April 2019, pages 22575-22599 provide the related contents.

### SUMMARY

Embodiments of the disclosure provide a computer-implemented picture processing method according to independent claim 1, an electronic device according to independent claim 10, a non-transitory computer-readable storage medium according to independent claim 11, and a computer program product according to independent claim 12.

According to a first aspect, a picture processing method is provided. The method includes: identifying a target area where a quick response (QR) code is located in a picture; obtaining parameters of the picture; and performing effacing process on the target area of the picture based on the parameters; in which the parameters include at least one of: first parameters of other areas of the picture other than the target area or second parameters of the target area; in which the first parameters include a first dominant color system, and the second parameters include at least one of a second dominant color system, attributes of a central icon of the QR code and a fault-tolerant ratio of the QR code; in which the obtaining parameters of the picture further includes obtaining first color values of pixels within a preset area of the other areas; dividing pixels into groups, in which pixels contained in a same group have the same first color value; determining a color corresponding to a group having a largest number of pixels as the first dominant color system; in which performing the effacing process on the target area of the picture based on the parameters includes obtaining an effacing method; wherein the effacing method is set based on a configuration file or a configuration database; and based on the parameters, performing the effacing process on the target area by adopting the effacing method comprising: performing a color setting operation based on the parameters within the target area.

According to a second aspect, an electronic device is provided. The electronic device includes: at least one processor and a memory communicatively coupled to the at least one processor. The memory stores instructions executable by the at least one processor, and when the instructions are executed by the at least one processor, the at least one processor is configured to perform the method according to the first aspect of the disclosure.

According to a third aspect, a non-transitory computer-readable storage medium having computer instructions stored thereon is provided. The computer instructions are configured to cause a computer to perform the method according to the first aspect of the disclosure.

According to a fourth aspect, a computer program product including computer programs is provided. When the computer programs are executed by a processor, the method according to the first aspect of the disclosure is performed.

### BRIEF DESCRIPTION OF THE DRAWINGS

The drawings are used to better understand the solution and do not constitute a limitation to the disclosure.
FIG. 1 is a flowchart illustrating a picture processing method according to some examples of the disclosure.
FIG. 2 is a flowchart illustrating a picture processing method according to some examples of the disclosure.
FIG. 3 is a flowchart illustrating a picture processing method according to some examples of the disclosure.
FIG. 4 is a schematic diagram illustrating a 36-color standard color card.
FIG. 5 is a flowchart illustrating a picture processing method according to some examples of the disclosure.
FIG. 6 is a flowchart illustrating a picture processing method according to some examples of the disclosure.
FIG. 7 is a flowchart illustrating a picture processing method according to some examples of the disclosure.
FIG. 8 is a flowchart illustrating a picture processing method according to some examples of the disclosure.
FIG. 9 is a block diagram illustrating a picture processing apparatus according to some examples of the disclosure.
FIG. 10 is a block diagram illustrating a picture processing apparatus according to some examples of the disclosure.
FIG. 11 is a block diagram illustrating an electronic device configured to perform the picture processing method according to some examples of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the scope of the disclosure. For clarity and conciseness, descriptions of well-known functions and structures are omitted in the following description.

Artificial Intelligence (AI) is a technical science that studies and develops theories, methods, technologies and application systems for simulating, extending and expanding human intelligence. Currently, AI technology has the advantages of high automation degree, high accuracy and low cost, and has been widely used.

Computer Vision (CV) is a science that studies how to make machines "see", it further refers to a science that causes cameras and computers instead of human eyes to identify, track, and measure targets, and further performs graphics processing, to obtain images more suitable for human eyes to observe or transmit to instruments for detection through computer processing. As a scientific discipline, CV studies related theories and technologies, and tries to generate AI systems that can obtain information from images or multi-dimensional data.

A picture processing method, a picture processing apparatus, an electronic device, and a storage medium according to the embodiments of the disclosure are described below with reference to the accompanying drawings.

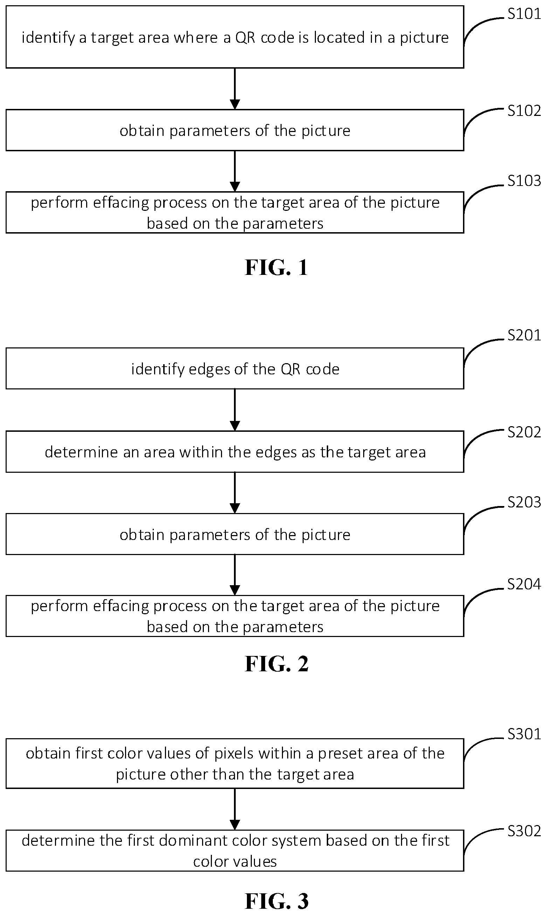

FIG. 1 is a flowchart illustrating a picture processing method according to some examples of the disclosure.

As illustrated in FIG. 1, the picture processing method includes the following.

At step S 101, a target area where a quick response (QR) code is located in a picture is identified.

The execution body of the picture processing method according to the disclosure may be a picture processing apparatus according to some examples of the disclosure. The picture processing apparatus may be a hardware device with data and information processing capability and/or software required for driving the hardware device. As an example, the execution body may be a workstation, a server, a computer, a user terminal or other devices. The user terminal includes but is not limited to mobile phone, computer, smart voice interaction device, smart home appliance, vehicle-mounted terminal, and the like.

It is noteworthy that the QR code is a coding mode widely used on mobile devices. Compared with traditional bar code, the QR code can store more information and represent more data types. For example, in the scenario of information acquisition, information such as business cards, maps, WIFI passwords, and data can be obtained through the QR code. In the advertisement push scenario, users can directly browse the audio and video advertisements pushed by the merchant after scanning the QR code. In the mobile E-commerce scenario, users can scan the QR code to directly conduct mobile shopping and place an order. In the anti-counterfeiting traceability scenario, users can scan the QR code to check the production place of the product and obtain the consumption place of the product in the background. In the promotion scenarios, users can download electronic coupons and draw lottery after scanning the QR code. In the membership management scenario, users can obtain electronic membership information and carry out membership services through the QR code. In the mobile payment scenario, the product can be scanned by means of the QR code and the payment can be completed through the mobile phone channel provided by the bank or third-party payment. In the account login scenario, users can log in to websites or applications through the QR code.

Due to the open nature of the QR code, the process of generating, storing, transmitting, displaying and using the QR code is almost free from any information security control, some illegal practitioners generate QR codes with malicious functions and spread the QR codes on the Internet. After scanning these malicious QR codes, users will be induced to download illegal applications or jump to designated malicious websites, which will cause the user's computer to be infected with viruses, thereby causing property losses to the user.

In the related art, in order to avoid the potential security risks caused by the QR codes, some service providers will review all pictures and delete the pictures containing the QR codes. However, for most pictures on the Internet, the remaining part of the picture after removing the QR code self and the content directed by the AR code may have high use value.

In view of the above problems, embodiments of the disclosure provide a picture processing method in which the area including the QR code in the picture is effaced, to avoid the possible security risks caused by generation, storage, transmission, display and use of the QR code. Therefore, the implementation and use cost is low, the valuable content of the picture is preserved as much as possible, the user's demands for normal transmission of the pictures can be satisfied, and the user experience is greatly improved.

The above-mentioned "target area" at least includes a QR code area occupied by the QR code. The above-mentioned "picture" is an image file containing the QR code stored on a cloud server or a host. The identification of the target area where the QR code is located can be carried out in various ways. For example, the identification can be performed through an object detection algorithm, such as You Only Look Once (YOLO, which is a deep convolutional neural network), Faster Region-Convolutional Neural Networks (Faster R-CNN), which are not limited in this disclosure.

It is understandable that, before identifying the target area where the QR code is located in the picture, the QR code is identified by performing QR code identification on the obtained picture. That is, it is determined whether the picture contains a QR code. If it is determined that the picture does not contain any QR code, no processing is performed. If it is determined that the picture contains a QR code, the target area where the QR code is located is identified.

At step S 102, parameters of the picture are obtained.

The parameters of the picture containing the QR code are obtained. The above-mentioned "parameters" may include picture parameters of areas other than the target area (i.e., first picture parameters of other areas of the picture other than the target area, which is also called first parameters) and picture parameters of the target area (i.e., second picture parameters of the target area, which is also called second parameters). The first parameters of the other areas may include a dominant color system of the other areas (also called a first dominant color system). The second parameters of the target area may include, but not limited to, a dominant color system of the target area (also called a second dominant color system), attributes of a central icon of the QR code (for example, the logo of the central icon and/or the size of the central icon of the QR code), and a fault-tolerant ratio of the QR code,. The specific manner of acquiring the picture parameters is not limited in the disclosure.

At step S103, effacing process is performed on the target area of the picture based on the parameters.

Corresponding effacing process can be performed on the target area of the picture based on the parameters of the picture obtained at the block S102. Depending on the parameters obtained at the block S102, the effacing process modes may include, but are not limited to, a color filling mode, a blurring processing mode and a QR code masking mode.

With the picture processing method according to the disclosure, the target area where the QR code is located in the picture is identified, the parameters of the picture are obtained, and the effacing process is performed on the target area based on the parameters. Therefore, normal dissemination of pictures is realized on the premise of avoiding the potential security risks caused by the QR code by performing the effacing process on the target area where the QR code is located, thereby improving the user experience. Moreover, performing the effacing process based on the parameters of the picture can ensure that the content information of the QR code is effaced or removed as much as possible and the content of the remaining part of the picture can be used by the user without the potential safety risked caused by the QR code.

FIG. 2 is a flowchart illustrating a picture processing method according to some examples of the disclosure.

As illustrated in FIG. 2, on the basis of examples related to FIG. 1, the picture processing method according to examples the disclosure may include the following steps.

The step S101 of "identifying the target area where the QR code is located in the picture" may include the following steps S201 and S202.

At step S201, edges of the QR code are identified.

The edges of the QR code in the picture are identified, and coordinate information of the edges of the QR code is obtained. The specific manner of the identification of the edges is not limited in the disclosure.

At step S202, an area enclosed by the edges is determined as the target area.

According to the edges of the QR code obtained at the step S201, the area within the edges is determined as the target area where the QR code is located according to the coordinate information, which is the object to be processed in the subsequent effacing process.

At step S203, parameters of the picture are obtained.

At step S204, effacing process is performed on the target area of the picture based on the parameters.

In detail, steps S203-S204 in this example are the same as steps S 102-S 103 in the above example, and details are not repeated here.

Further, as illustrated in FIG. 3, the step S203 of "obtaining the parameters of the picture" in the above example may include obtaining a first dominant color system of other areas of the picture excluding the target area, which may specifically include the following steps S301-S302.

At step S301, first color values of pixels within a preset area of the picture other than the target area are obtained.

According to the target area obtained at the step S202, the preset area having an expansion width of X and outside the target area is selected, and color values of the pixels within the preset area are obtained, that is, the first color values are obtained. For example, the first color values can be obtained through a statistic on the Red-Green-Blue (RGB) color values of all pixels within the preset area having the expansion width of X (the value of X can be adjusted according to specific actual needs, which generally ranges from 3 to 5 pixels) and outside the target area.

At step S302, the first dominant color system is determined based on the first color values.

The pixels are divided into groups, and pixels contained in each group separately have the same color. The first dominant color system is determined based on the number of pixels contained in each group of pixels having the same color. The tirecolor corresponding to a group having the largest number of pixels is determined as the first dominant color system.

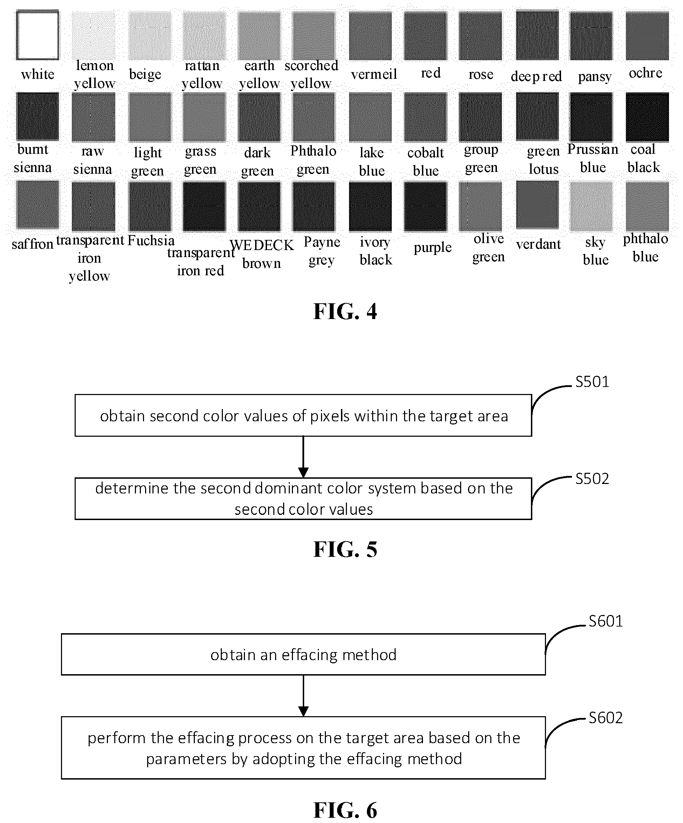

As another feasible implementation, the first color values of the pixels within the preset area obtained at step S301 are compared once with colors of a Color Card respectively one by one to find, from the Color Card, colors matched with the first color values according to the proximity principle. That is, colors (also called first matched colors) of the Color Card matching with the first color values are determined according to the proximity allocation principle. Each time determining that a first matched color of the Color Card matches with a first color value, the matching count of this first matched color is increased by one. The first dominant color system is determined based on values of respective matching count of the first matched colors. For example, a certain first matched color corresponding to the largest value of the matching count is used as the first dominant color system. The Color Card may be a color wheel having 12 colors, a color card having 24 standard colors, or a color card having 36 standard colors. The color card having 36 standard colors are illustrated as FIG. 4.

Further, as illustrated in FIG. 5, in the case that the second parameters include the second dominant color system of the target area of the picture, the step S203 of "obtaining the parameters of the picture" includes acquiring the second dominant color system of the target area of the picture, which includes the following steps S501-S502.

At step S501, second color values of pixels within the target area are obtained.

According to the target area acquired at the step S202, the second color values of the pixels in the target area are acquired. The acquisition mode of the second color values is the same as that at the step S301, which is not repeated here.

At step S502, a second dominant color system is determined based on the second color values.

As a feasible implementation, the pixels are divided into groups, and pixels contained in each group separately have the same color. The second dominant color system may be determined based on the number of pixels contained in each group of pixels having the same color. For example, the color corresponding to a group having the largest number of pixels is determined as the second dominant color system.

As another feasible implementation, the second color values of the pixels within the target area are compared once with colors of a Color Card respectively one by one to find, from the Color Card, colors matched with the second color values according to the proximity principle. That is, colors (also called first matched colors) of the Color Card matching with the first color values are determined according to the proximity allocation principle. The specific mode is the same as that of step S302, which is not repeated here.

Further, as illustrated in FIG. 6, the step S204 of "performing effacing process on the target area of the picture based on the parameters" in above example may include the following steps S601-S602.

At block S601, an effacing method is obtained.

The effacing method can be set by the system by default, or the effacing method can be preset by users before performing the effacing process on the target area of the picture. The effacing method may include, but is not limited to, a method of filling color to the target area, a method of blurring the target area and a method of adding a QR code masking to the target area. In actual practice, the effacing method can be set based on a configuration file or a configuration database, accompanied by a configuration Graphical User Interface (GUI for short).

Any of the three effacing methods can be chose to perform the effacing process on the target area of the picture. The method of blurring the target area may include mosaic processing, and frosted glass processing.

At block S602, the effacing process is performed on the target area by adopting the effacing method based on the parameters.

A color setting operation is performed based on the picture parameters within the target area where the QR code is located and the picture parameters within the other area. For example, reference colors, solid colors and gradient colors can be set for the target area and/or other areas.

In the case where the effacing method is the method of filling color in the target area, the parameters include the first parameters, and the first parameters include the first dominant color system of other areas of the picture other than the target area, the above step S602 of "performing the effacing process on the target area by adopting the effacing method based on the parameters" includes performing color filling on the target area based on the first dominant color system.

In detail, the first dominant color system is used to perform the color filling on the target area. For example, the first dominant color system can be used as the reference color to set solid colors or gradient colors for the target area. Setting the gradient colors for the target area may be setting linear gradient colors or center-radial gradient colors. Performing the color filling on the target area in the picture according to the first dominant color system of other areas of the picture other than the target area can make the color of the processed target area similar to the color of the other areas of the picture, so as to remove the seams at the boundaries between the processed target area and the other areas smooth.

In the case where the effacing method is the method of blurring the target area, the parameters include the second parameters, and the second parameters include the second dominant color system of the target area, the above step S602 of "performing the effacing process on the target area by adopting the effacing method based on the parameters" may include : determining a reference color to be used in the method of blurring the target area based on the second dominant color system, and performing the effacing process on the target area based on the reference color.

For example, colors within the target area is used as the reference color. That is, the reference color to be used in the method of blurring the target area is determined based on the second dominant color system within the target area. For example, the second dominant color system within the target area is used as the reference color to be used by the method of blurring the target area to performing the blurring processing on the target area. Determining the colors within the target area as the reference color, compared with the traditional blurring method of unified black and white mosaic or white frosted glass, can make the blurring effect smoother that is no obvious seam will be created at the boundaries between the processed target area and the other areas.

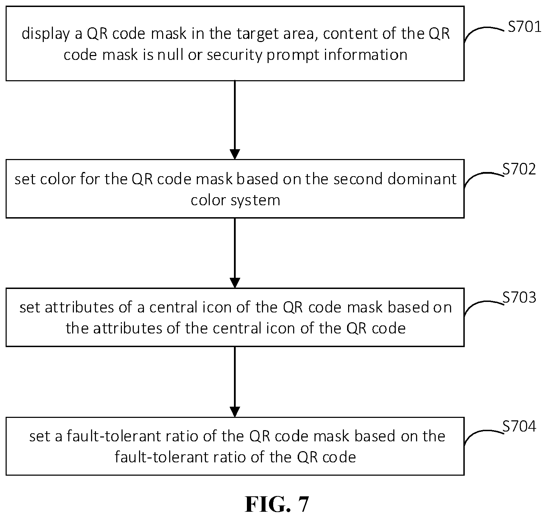

In the case where the effacing method is the method of adding a QR code mask to the target area, the parameters include the second parameters, and the second parameters include at least one of the second dominant color system of the target area, attributes of a central icon of the QR code, and the fault-tolerant ratio of the QR code, ass illustrated in FIG. 7, the above step S602 of "performing the effacing process on the target area by adopting the effacing method based on the parameters" may include the following steps S701-S704.

At step S701, a QR code mask is displayed within the target area, and content corresponding to the QR code mask is null or security prompt information.

The content of the QR code mask can be set as null or security prompt information, where the security prompt information may be the wording "** reminds you, do not access the QR code from unknown sources, beware of fraud!". Therefore, when the user scans the QR code mask, the specific security prompt information can be provided to the user. This effacing method has little impact on the original picture will not create obvious seams between the target area and other areas and will keep the original layout of the original image as much as possible. In the target area, the QR code mask is displayed above the QR code. The QR code mask is a generated QR code having the same parameters as the original QR code, but the content of the generated QR code is different from that of the original QR code. There are many technical options, for example, QRcode library in Python (a programming language) language, MyQR (a function for creating QR codes) library or QRCode.js (QR code generation) library in JavaScript (a programming language) language. The parameters of the QR code mask can refer to the second parameters, that is, the second dominant color system, the attributes of the central icon of the QR code, the size of the central icon of the QR code, and the fault-tolerant ratio of the QR code.

At step S702, the color is set for the QR code mask based on the second dominant color system.

The reference color of the QR code mask is set based on the second dominant color system in the second parameters, that is, the color of the QR code mask is set based on the second dominant color system in the second parameters. For example, the second dominant color system in the second parameters is set as the color of the QR code mask, which can be set through a configuration file or a configuration database based on the configuration GUI.

At step S703, attributes of a central icon of the QR code mask is set based on the attributes of the central icon of the QR code.

The central icon of the QR code in the second parameters can be set as the central icon of the QR code mask, and the size of the central icon of the QR code mask is the same as the size of the central icon in the second parameters, which can be set through a configuration file or a configuration database based on the configuration GUI.

At step S704, a fault-tolerant ratio of the QR code mask is set based on the fault-tolerant ratio of the QR code.

The fault-tolerant ratio of the QR code in the second parameters can be set as the fault-tolerant ratio of the QR code mask, which can be set through a configuration file or a configuration database based on the configuration GUI.

According to the parameters of the original QR code in the picture, the QR code mask with the same style as the original QR code is generated, which can ensure that the layout of the picture is maintained as much as possible. The content of the QR code mask is set to be null or security prompt information, which can avoid the potential security risks caused by the original QR code.

With the picture processing method according to the disclosure, the area enclosed by the identified edges of the QR code is determined as the target area, and the first color values of the pixels within the target area and/or the second color values of the pixels with the other areas of the picture other than the target area and corresponding first matching colors and second matching colors are obtained. The first dominant color system and the second dominant color system are determined based on the number of successful match times corresponding to each matched color, and after the system settings including the effacing method setting and the color setting are performed based on the effacing parameters, the picture is effaced by adopting the corresponding effacing method. With the picture processing method according to examples of the disclosure, by effacing the target area where the QR code is located of the picture, normal spread of the picture is realized on the premise of avoiding the potential security risks caused by the QR code, and the user experience is improved. The effacing process is performed based on the parameters of the picture, such as the method of filling color to the target area is performed based on the first dominant color system of the picture other than the target area, the method of blurring the target area is performed based on the second dominant color system within the target area, and the method of adding a QR code mask to the target area is performed based on the second dominant color system, the attributes of the central icon of the QR code and the fault-tolerant ratio of the QR code. It is ensured that after the content information of the QR code is effaced as much as possible, the original layout of the picture will not be greatly changed, and the user experience will be further improved.

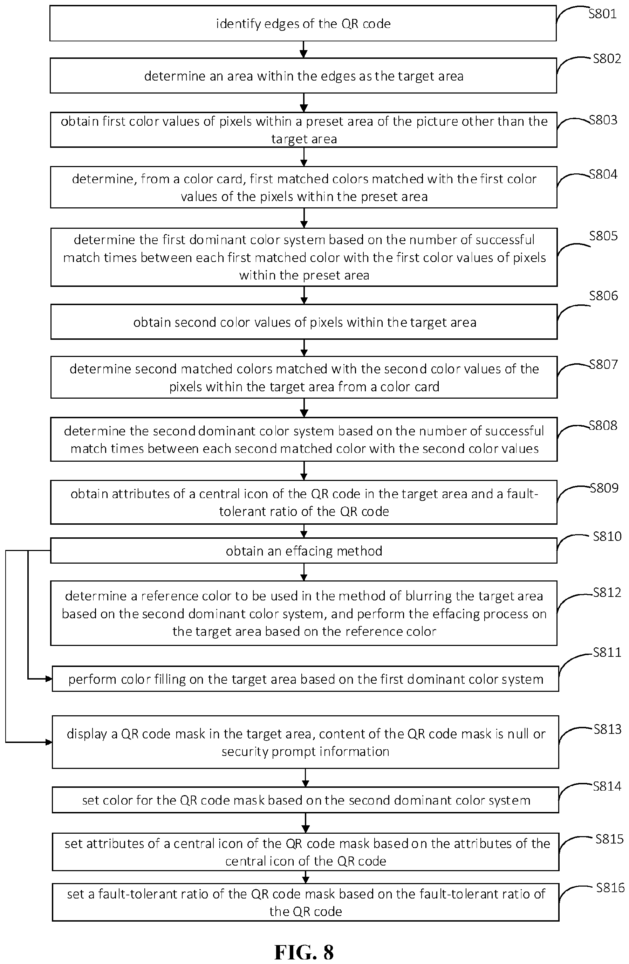

In order to clearly illustrate the picture processing method according to the disclosure, the specific implementation process will be described below with reference to FIG. 8. As illustrated in FIG. 8, the method includes the following steps.

At step S801, edges of the QR code are identified.

At step S802, an area within the edges is determined as the target area.

At step S803, first color values of pixels within a preset area of the picture other than the target area are obtained.

At step S804, first matched colors matched with the first color values of the pixels within the preset area are determined from a color card.

At step S805, the first dominant color system is determined based on the number of successful match times between each first matched color and the first color values of the pixels within the preset area.

At block S806, second color values of pixels within the target area are obtained.

At block S807, second matched colors matched with the second color values of the pixels within the target area are determined from the color card.

At block S808, the second dominant color system is determined based on the number of successful match times between each second matched color and the second color values of the pixels within the target area.

At block S809, attributes of a central icon of the QR code and a fault-tolerant ratio of the QR code within the target area are obtained.

At block S810, an effacing method is obtained.

At block S811, color filling is performed on the target area based on the first dominant color system.

At block S812, a reference color to be used in the method of blurring the target area is determined based on the second dominant color system, and the effacing process is performed on the target area based on the reference color.

At block S813, a QR code mask is displayed in the target area, and content of the QR code mask is null or security prompt information.

At block S814, a color is set for the QR code mask based on the second dominant color system.

At block S815, attributes of a central icon of the QR code mask is set based on the attributes of the central icon of the QR code.

At block S816, a fault-tolerant ratio of the QR code mask is set based on the fault-tolerant ratio of the QR code.

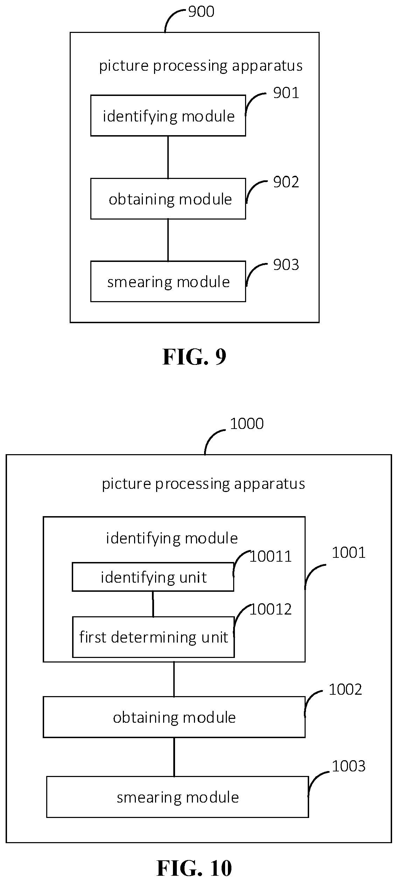

FIG. 9 is a block diagram of a picture processing apparatus according to some examples of the disclosure.

As illustrated in FIG. 9, the picture processing apparatus 900 includes: an identifying module 901, an obtaining module 902 and an effacing module 903.

The identifying module 901 is configured to identify a target area where a QR code is located in a picture.

The obtaining module 902 is configured to obtain parameters of the picture.

The effacing module 903 is configured to perform effacing process on the target area of the picture based on the parameters.

It is noteworthy that the above explanation of the examples of the picture processing method is applicable to the picture processing apparatuses according to examples of the disclosure, and the specific processes will not be repeated here.

With the picture processing apparatus according to the disclosure, the target area where the QR code is located in the picture is identified, the parameters of the picture are obtained, and the effacing process is performed on the target area of the picture based on the parameters. Therefore, normal dissemination of the picture is realized on the premise of avoiding the potential security risks caused by the QR code by performing the effacing process on the target area where the QR code is located, thereby improving the user experience. Moreover, the effacing process is performed based on the parameters of the picture to ensure that the content information of the QR code is effaced as much as possible and the content of the remaining part of the picture can be used by the user without the potential safety risked caused by the QR code.

FIG. 10 is a block diagram illustrating a picture processing apparatus according to some examples of the disclosure.

As illustrated in FIG. 10, the picture processing apparatus 1000 includes: an identifying module 1001, an obtaining module 1002 and an effacing module 1003.

The identifying module 1001 has the same structure and function as the identifying module 901 in the previous example, the obtaining module 1002 has the same structure and function as the obtaining module 902 in the previous example, and the effacing module 1003 has the same structure and function as the effacing module 903 in the previous example.

The identifying module 1001 further includes: an identifying unit 10011 and a first determining unit 10012. The identifying unit 10011 is configured to identify edges of the QR code. The first determining unit 10012 is configured to determine an area enclosed by the edges as the target area.

The parameters include: first parameters of other areas of the picture other than the target area and/or second parameters of the target area. The first parameters include a first dominant color system. The second parameters include at least one of a second dominant color system, attributes of a central icon of the QR code and a fault-tolerant ratio of the QR code.

The obtaining module 1002 includes: a first obtaining unit and a second determining unit. The first obtaining unit is configured to obtain first color values of pixels within a preset area of the picture other than the target area. The second determining unit is configured to determine the first dominant color system based on the first color values.

The second determining unit includes a first determining sub-unit and a second determining sub-unit. The first determining sub-unit is configured to determine, from a color card, first matched colors matched with the first color values of the pixels within the preset area. The second determining sub-unit is configured to determine the first dominant color system based on the number of successful match times between each first matched color and the first color values of the pixels within the preset area.

In the case that the second parameters include the second dominant color system, the obtaining module 1002 includes a second obtaining unit and a third determining unit. The second obtaining unit is configured to obtain second color values of pixels within the target area. The third determining unit is configured to determine the second dominant color system based on the second color values.

The third determining unit includes: a third determining sub-unit and a fourth determining sub-unit. The third determining sub-unit is configured to determine, from a color card, second matched colors matched with the second color values of the pixels within the target area. The fourth determining sub-unit is configured to determine the second dominant color system based on the number of successful match times between each second matched color and the second color values of the pixels within the target area.

The effacing module 1003 includes a third obtaining unit and an effacing unit. The third obtaining unit is configured to obtain an effacing method. The effacing unit is configured to perform the effacing process on the target area based on the parameters by adopting the effacing method.

The effacing method includes any one of: a method of filling color to the target area, a method of blurring the target area, and a method of adding a QR code mask to the target area.

In the case that the effacing method is the method of filling color to the target area, the parameters include first parameters, and the first parameters include the first dominant color system of the other areas of the picture, the effacing unit includes: a filling sub-unit, configured to perform color filling on the target area based on the first dominant color system.

In the case that the effacing method is the method of blurring the target area, the parameters include second parameters, and the second parameters include the second dominant color system of the target area, the effacing unit includes: an effacing sub-unit configured to determine a reference color to be used in the method of blurring the target area based on the second dominant color system, and perform the effacing process on the target area based on the reference color.

In the case that the effacing method is the method of adding a QR code mask to the target area, the parameters include the second parameters, and in the case that the second parameters include at least one of: the second dominant color system of the target area, attributes of a central icon of the QR code and a fault-tolerant ratio of the QR code, the effacing unit includes at least one of a displaying sub-unit, a first setting sub-unit, a second setting sub-unit and a third setting sub-unit. The displaying sub-unit is configured to display a QR code mask in the target area. The content of the QR code mask is null or security prompt information. The first setting sub-unit is configured to set color of the QR code mask based on the second dominant color system. The second setting sub-unit is configured to set attributes of a central icon of the QR code mask based on the attributes of the central icon of the QR code. The third setting sub-unit is configured to set a fault-tolerant ratio of the QR code mask based on the fault-tolerant ratio of the QR code.

It is noteworthy that the above explanation on the picture processing method is applicable to the picture processing apparatuses according to the disclosure, and the specific processes will not be repeated here.

With the picture processing apparatus according to the disclosure, the area enclosed by the identified edges of the QR code is determined as the target area, and the first color values of the pixels within the target area and/or the second color values of the pixels with the other areas of the picture other than the target area and corresponding first matching colors and second matching colors are obtained. The first dominant color system and the second dominant color system are determined based on the number of successful match times corresponding to each matched color, and after the system settings including the effacing method setting and the color setting are performed based on the effacing parameters, the picture is effaced by adopting the corresponding effacing method. With the picture processing method according to examples of the disclosure, by effacing the target area where the QR code is located of the picture, normal spread of the picture is realized on the premise of avoiding the potential security risks caused by the QR code, and the user experience is improved. The effacing process is performed based on the parameters of the picture, such as the method of filling color to the target area is performed based on the first dominant color system of the picture other than the target area, the method of blurring the target area is performed based on the second dominant color system within the target area, and the method of adding a QR code mask to the target area is performed based on the second dominant color system, the attributes of the central icon of the QR code and the fault-tolerant ratio of the QR code. It is ensured that after the content information of the QR code is effaced as much as possible, the original layout of the picture will not be greatly changed, and the user experience will be further improved.

In the technical solution of the disclosure, the collection, storage, use, processing, transmission, provision, and disclosure of the user's personal information involved are all in compliance with relevant laws and regulations, and do not violate public order and good customs.

According to the embodiments of the disclosure, the disclosure also provides an electronic device, a readable storage medium and a computer program product.

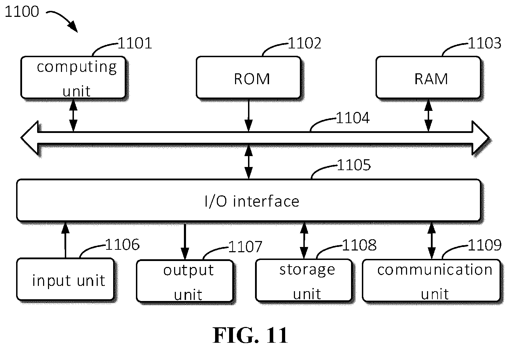

FIG. 11 is a block diagram of an example electronic device 1100 used to implement the embodiments of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 11, the electronic device 1100 includes: a computing unit 1101 performing various appropriate actions and processes based on computer programs stored in a read-only memory (ROM) 1102 or computer programs loaded from the storage unit 1108 to a random access memory (RAM) 1103. In the RAM 1103, various programs and data required for the operation of the device 1100 are stored. The computing unit 1101, the ROM 1102, and the RAM 1103 are connected to each other through a bus 1104. An input/output (I/O) interface 1105 is also connected to the bus 1104.

Components in the device 1100 are connected to the I/O interface 1105, including: an inputting unit 1106, such as a keyboard, a mouse; an outputting unit 1107, such as various types of displays, speakers; a storage unit 1108, such as a disk, an optical disk; and a communication unit 1109, such as network cards, modems, and wireless communication transceivers. The communication unit 1109 allows the device 1100 to exchange information/data with other devices through a computer network such as the Internet and/or various telecommunication networks.

The computing unit 1101 may be various general-purpose and/or dedicated processing components with processing and computing capabilities. Some examples of computing unit 1101 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 1101 executes the various methods and processes described above, such as the picture processing method shown in FIGS. 1-8. For example, in some embodiments, the method may be implemented as a computer software program, which is tangibly contained in a machine-readable medium, such as the storage unit 1108. In some embodiments, part or all of the computer program may be loaded and/or installed on the device 1100 via the ROM 1102 and/or the communication unit 1109. When the computer program is loaded on the RAM 1103 and executed by the computing unit 1101, one or more steps of the method described above may be executed. Alternatively, in other embodiments, the computing unit 1101 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), the Internet and a block-chain network.

The computer system may include a client and a server. The client and server are generally remote from each other and interacting through a communication network. The client-server relation is generated by computer programs running on the respective computers and having a client-server relation with each other. The server may be a cloud server, also known as a cloud computing server or a cloud host, which is a host product in a cloud computing service system, in order to solve the existing defects of difficult management and weak business expansion in traditional physical hosting and virtual private server (VPS) services. The server can also be a server of a distributed system, or a server combined with a block-chain.

According to the embodiment of the disclosure, the disclosure also provides a computer program product including computer programs. When the computer programs are executed by a processor, the steps of the picture processing method shown in the above embodiments of the disclosure is implemented.

## Claims

1. A computer-implemented picture processing method, comprising:
identifying (S101) a target area where a quick response, QR, code is located in a picture;
obtaining (S 102; S203) parameters of the picture; and
performing (S103; S204) effacing process on the target area of the picture based on the parameters;
wherein the parameters comprise at least one of: first parameters of other areas of the picture other than the target area or second parameters of the target area;
wherein the first parameters comprise a first dominant color system, and the second parameters comprise at least one of a second dominant color system, attributes of a central icon of the QR code and a fault-tolerant ratio of the QR code;
wherein the step of obtaining (S102; S203) parameters of the picture comprises: obtaining first color values of pixels within a preset area of the other areas; dividing pixels into groups, wherein pixels contained in a same group have the same first color value; determining a color corresponding to a group having a largest number of pixels as the first dominant color system;
wherein performing (S103; S204) the effacing process on the target area of the picture based on the parameters comprises:
obtaining (S601; S810) an effacing method; wherein the effacing method is set based on a configuration file or a configuration database; and
based on the parameters, performing (S602) the effacing process on the target area by adopting the effacing method comprising: performing a color setting operation based on the parameters within the target area.

2. The method of claim 1, wherein identifying (S101) the target area where the QR code is located in the picture, comprises:
identifying (S201; S801) edges of the QR code; and
determining (S202; S802) an area enclosed by the edges as the target area.

3. The method of claim 1, wherein determining (S302) the first dominant color system based on the first color values comprises:
determining (S804), from a color card, first matched colors matched with the first color values within the preset area; and
determining (S805) the first dominant color system based on the number of successful match times between each first matched color and the first color values of the pixels within the preset area.

4. The method of claim 1, wherein obtaining (S102; S203) the parameters of the picture in the case that the second parameters comprise the second dominant color system, comprises:
obtaining (S501; S806) second color values of pixels within the target area; and
determining (S502) the second dominant color system based on the second color values.

5. The method of claim 4, wherein determining the second dominant color system based on the second color values comprises:
determining (S807), from a color card, second matched colors matched with the second color values of the pixels within the target area; and
determining (S808) the second dominant color system based on the number of successful match times between each second matched color and the second color values of the pixels within the target area.

6. The method of claim 1,
wherein the effacing method comprises any one of the following:
a method of filling color to the target area, a method of blurring the target area, and a method of adding a QR code mask to the target area; wherein the QR code mask is a QR code having the same parameters as the original QR code, but having different content from the original QR code.

7. The method of claim 6, wherein in the case that the effacing method is the method of filling color to the target area, the parameters comprise first parameters, and the first parameters comprise the first dominant color system of other areas of the picture other than the target area, performing (S602) the effacing process on the target area based on the parameters by adopting the effacing method comprises:
performing (S811) color filling on the target area using the first dominant color system.

8. The method of claim 6, wherein in the case that the effacing method is the method of blurring the target area, the parameters comprise second parameters, and the second parameters comprise the second dominant color system of the target area, performing (S602) the effacing process on the target area based on the parameters by adopting the effacing method comprises:
determining (S812) the second dominant color system within the target area as a reference color to be used in the method of blurring the target area, and performing the effacing process on the target area based on the reference color.

9. The method of claim 6, wherein the effacing method is the method of adding a QR code mask to the target area, the parameters comprise the second parameters, and the second parameters comprise at least one of: the second dominant color system of the target area, attributes of a central icon of the QR code and a fault-tolerant ratio of the QR code, performing (S602) the effacing process on the target area based on the parameters by adopting the effacing mode comprises at least one of the followings:
displaying (S701; S813) a QR code mask in the target area, wherein content of the QR code mask is null or security prompt information, preferably, the QR code mask is generated using a QRcode library in Python language, MyQR library or QRCode.j s library in JavaScript language;
setting (S702; S814) the second dominant color system as a color for the QR code mask;
setting (S703; S815) the central icon of the QR code as a central icon of the QR code mask and setting the size of the central icon of the QR code mask being the same as the size of the central icon in the second parameters through a configuration file or a configuration database based on a configuration Graphical User Interface, GUI; and
setting (S704; S816) a fault-tolerant ratio of the QR code mask based on the fault-tolerant ratio of the QR code through the configuration file or the configuration database based on the configuration GUI.

10. An electronic device, comprising:
at least one processor; and
a memory communicatively coupled to the at least one processor; wherein,
the memory stores instructions executable by the at least one processor, when the instructions are executed by the at least one processor, the at least one processor is configured to implement the method of any one of claims 1 to 9.

11. A non-transitory computer-readable storage medium having computer instructions stored thereon, wherein the computer instructions are configured to cause a computer to implement the method of any one of claims 1 to 9.

12. A computer program product comprising computer programs, wherein when the computer programs are executed by a processor, the method of any one of claims 1 to 9 is implemented.

## Patentansprüche

1. Computer-implementiertes Bildverarbeitungsverfahren, umfassend:
Identifizieren (S101) einer Zielfläche, in der sich ein QR-Code (Quick Response) in einem Bild befindet;
Erhalten (S102; S203) von Parametern des Bildes; und
Durchführen (S103; S204) eines Auslöschungsverfahrens auf der Zielfläche des Bildes basierend auf den Parametern;
wobei die Parameter mindestens einen umfassen von: ersten Parametern von anderen Flächen des Bildes als der Zielfläche oder zweiten Parametern der Zielfläche;
wobei die ersten Parameter ein erstes dominantes Farbsystem umfassen, und die zweiten Parameter mindestens eines von einem zweiten dominanten Farbsystem, Attributen eines zentralen Icons des OR-Codes und einem fehlertoleranten Verhältnis des QR-Codes umfassen;
wobei der Schritt des Erhaltens (S102; S203) von Parametern des Bildes umfasst: Erhalten von ersten Farbwerten von Pixeln innerhalb einer voreingestellten Fläche der anderen Flächen; Unterteilen von Pixeln in Gruppen, wobei in einer gleichen Gruppe enthaltene Pixel den gleichen ersten Farbwert aufweisen; Bestimmen einer Farbe, die einer Gruppe mit einer größten Anzahl von Pixeln entspricht, als das erste dominante Farbsystem;
wobei das Durchführen (S103; S204) des Auslöschungsverfahrens auf der Zielfläche des Bildes basierend auf den Parametern umfasst:
Erhalten (S601; S810) eines Auslöschungsverfahrens; wobei das Auslöschungsverfahren basierend auf einer Konfigurationsdatei oder einer Konfigurationsdatenbank eingestellt wird; und
basierend auf den Parametern, Durchführen (S602) des Auslöschungsverfahrens auf der Zielfläche durch Anwenden des Auslöschungsverfahrens, umfassend: Durchführen eines Farbeinstellvorgangs basierend auf den Parametern innerhalb der Zielfläche.

2. Verfahren nach Anspruch 1, wobei das Identifizieren (S101) der Zielfläche, in der sich der QR-Code in dem Bild befindet, umfasst:
Identifizieren (S201; S801) der Kanten des QR-Codes; und Bestimmen (S202; S802) einer von den Kanten eingeschlossenen Fläche als Zielfläche.

3. Verfahren nach Anspruch 1, wobei das Bestimmen (S302) des ersten dominanten Farbsystems basierend auf den ersten Farbwerten umfasst:
Bestimmen (S804), von einer Farbkarte, erster übereinstimmender Farben, die mit den ersten Farbwerten innerhalb der voreingestellten Fläche übereinstimmen; und
Bestimmen (S805) des ersten dominanten Farbsystems basierend auf der Anzahl erfolgreicher Übereinstimmungen zwischen jeder ersten übereinstimmenden Farbe und den ersten Farbwerten der Pixel innerhalb der voreingestellten Fläche.

4. Verfahren nach Anspruch 1, wobei das Erhalten (S102; S203) der Parameter des Bildes in dem Fall, dass die zweiten Parameter das zweite dominante Farbsystem umfassen, umfasst:
Erhalten (S501; S806) von zweiten Farbwerten von Pixeln innerhalb der Zielfläche;
und
Bestimmen (S502) des zweiten dominanten Farbsystems basierend auf den zweiten Farbwerten.

5. Verfahren nach Anspruch 4, wobei das Bestimmen des zweiten dominanten Farbsystems basierend auf den zweiten Farbwerten umfasst:
Bestimmen (S807), von einer Farbkarte, zweiter übereinstimmender Farben, die mit den zweiten Farbwerten der Pixel innerhalb der Zielfläche übereinstimmen; und
Bestimmen (S808) des zweiten dominanten Farbsystems basierend auf der Anzahl erfolgreicher Übereinstimmungen zwischen jeder zweiten übereinstimmenden Farbe und den zweiten Farbwerten der Pixel innerhalb der Zielfläche.

6. Verfahren nach Anspruch 1,
wobei das Auslöschungsverfahren eines der folgenden umfasst:
ein Verfahren zum Auffüllen der Zielfläche mit Farbe, ein Verfahren zum Verwischen der Zielfläche und ein Verfahren zum Hinzufügen einer QR-Code-Maske zu der Zielfläche; wobei die QR-Code-Maske ein QR-Code ist, der dieselben Parameter wie der ursprüngliche QR-Code aufweist, aber einen anderen Inhalt als der ursprüngliche QR-Code aufweist.

7. Verfahren nach Anspruch 6, wobei in dem Fall, dass das Auslöschungsverfahren das Verfahren zum Auffüllen der Zielfläche mit Farbe ist, die Parameter erste Parameter umfassen, und die ersten Parameter das erste dominante Farbsystem anderer Flächen des Bildes als die Zielfläche umfassen, wobei das Durchführen (S602) des Auslöschungsverfahrens auf der Zielfläche basierend auf den Parametern durch Anwenden des Auslöschungsverfahrens umfasst:
Durchführen (S811) einer Farbauffüllung auf der Zielfläche unter Verwendung des ersten dominanten Farbsystems.

8. Verfahren nach Anspruch 6, wobei in dem Fall, dass das Auslöschungsverfahren das Verfahren zum Verwischen der Zielfläche ist, die Parameter zweite Parameter umfassen und die zweiten Parameter das zweite dominante Farbsystem der Zielfläche umfassen, wobei das Durchführen (S602) des Auslöschungsverfahrens auf der Zielfläche basierend auf den Parametern durch Anwenden des Auslöschungsverfahrens umfasst:
Bestimmen (S812) des zweiten dominanten Farbsystems innerhalb der Zielfläche als eine Referenzfarbe, die in dem Verfahren zum Verwischen der Zielfläche zu verwenden ist, und Durchführen des Auslöschungsverfahrenes auf der Zielfläche basierend auf der Referenzfarbe.

9. Verfahren nach Anspruch 6, wobei das Auslöschungsverfahren das Verfahren zum Hinzufügen einer QR-Code-Maske zu der Zielfläche ist, die Parameter die zweiten Parameter umfassen und die zweiten Parameter mindestens eines umfassen von: dem zweiten dominanten Farbsystem der Zielfläche, Attributen eines zentralen Icons des QR-Codes und einem fehlertoleranten Verhältnis des QR-Codes, wobei das Durchführen (S602) des Auslöschungsverfahrenes auf der Zielfläche basierend auf den Parametern durch Anwenden des Auslöschungsmodus, mindestens eines der folgenden umfasst:
Anzeigen (S701; S813) einer QR-Code-Maske auf der Zielfläche, wobei der Inhalt der QR-Code-Maske Null oder eine Sicherheitsabfrage-Information ist, wobei die QR-Code-Maske vorzugsweise unter Verwendung einer QR-Code-Bibliothek in der Python-Sprache, MyQR-Bibliothek oder QRCode.js-Bibliothek in der JavaScript-Sprache erzeugt wird;
Einstellen (S702; S814) des zweiten dominanten Farbsystems als eine Farbe für die QR-Code-Maske;
Einstellen (S703; S815) des zentralen Icons des QR-Codes als ein zentrales Icon der QR-Code-Maske und Einstellen der Größe des zentralen Icons der QR-Code-Maske, die die gleiche ist wie die Größe des zentralen Icons in den zweiten Parametern, durch eine Konfigurationsdatei oder eine Konfigurationsdatenbank basierend auf einer Konfigurationsgrafischen Benutzeroberfläche (GUI); und
Einstellen (S704; S816) eines fehlertoleranten Verhältnisses der QR-Code-Maske basierend auf dem fehlertoleranten Verhältnis des QR-Codes durch die Konfigurationsdatei oder die Konfigurationsdatenbank basierend auf der Konfigurations-GUI.

10. Elektronische Vorrichtung, umfassend:
mindestens einen Prozessor; und
einen Speicher, der kommunikativ mit dem mindestens einen Prozessor verbunden ist; wobei
der Speicher Befehle speichert, die von dem mindestens einen Prozessor ausgeführt werden können, wenn die Befehle von dem mindestens einen Prozessor ausgeführt werden, wobei der mindestens eine Prozessor konfiguriert ist, um das Verfahren nach einem der Ansprüche 1 bis 9 zu implementieren.

11. Nicht-transitorisches computerlesbares Speichermedium mit darauf gespeicherten Computerbefehlen, wobei die Computerbefehle konfiguriert sind, um einen Computer zu veranlassen, das Verfahren nach einem der Ansprüche 1 bis 9 zu implementieren.

12. Computerprogrammprodukt, umfassend Computerprogramme, wobei, wenn die Computerprogramme von einem Prozessor ausgeführt werden, das Verfahren nach einem der Ansprüche 1 bis 9 implementiert wird.

## Revendications

1. Procédé de traitement d'image mis en œuvre par ordinateur, comprenant :
identifier (S101) une zone cible où un code à réponse rapide, QR, est situé dans une image ;
obtenir (S102 ; S203) des paramètres de l'image ; et
réaliser (S103 ; S204) un processus d'effacement sur la zone cible de l'image sur la base des paramètres ;
dans lequel les paramètres comprennent au moins un parmi : des premiers paramètres d'autres zones de l'image autres que la zone cible ou des seconds paramètres de la zone cible ;
dans lequel les premiers paramètres comprennent un premier système de couleur dominante, et les seconds paramètres comprennent au moins un élément parmi un second système de couleur dominante, des attributs d'une icône centrale du QR code et un rapport de tolérance aux fautes du QR code ;
dans lequel l'étape d'obtention (S102 ; S203) de paramètres de l'image comprend : obtenir des premières valeurs de couleur de pixels dans une zone prédéfinie des autres zones ; diviser des pixels en groupes, dans lequel des pixels contenus dans un même groupe ont la même première valeur de couleur ; déterminer une couleur correspondant à un groupe ayant un nombre le plus grand de pixels comme premier système de couleur dominante ;
dans lequel la réalisation (S103 ; S204) du processus d'effacement sur la zone cible de l'image sur la base des paramètres comprend :
obtenir (S601 ; S810) un procédé d'effacement ; dans lequel le procédé d'effacement est défini sur la base d'un fichier de configuration ou d'une base de données de configuration ; et
sur la base des paramètres, réaliser (S602) le processus d'effacement sur la zone cible en adoptant le procédé d'effacement comprenant : réaliser une opération d'établissement de couleur basée sur les paramètres dans la zone cible.

2. Procédé selon la revendication 1, dans lequel l'identification (S101) de la zone cible où le QR code est situé dans l'image, comprend :
identifier (S201 ; S801) des bords du QR code ; et
déterminer (S202 ; S802) une zone délimitée par les bords en tant que zone cible.

3. Procédé selon la revendication 1, dans lequel la détermination (S302) du premier système de couleur dominante sur la base des premières valeurs de couleur comprend :
déterminer (S804), à partir d'une carte de couleurs, des premières couleurs associées qui sont associées aux premières valeurs de couleur dans la zone prédéfinie ; et
déterminer (S805) le premier système de couleur dominante sur la base du nombre d'associations réussies entre chaque première couleur associée et les premières valeurs de couleur des pixels dans la zone prédéfinie.

4. Procédé selon la revendication 1, dans lequel l'obtention (S102 ; S203) des paramètres de l'image dans le cas où les seconds paramètres comprennent le second système de couleur dominante, comprend :
obtenir (S501 ; S806) des secondes valeurs de couleur de pixels dans la zone cible ; et
déterminer (S502) le second système de couleur dominante sur la base des secondes valeurs de couleur.

5. Procédé selon la revendication 4, dans lequel la détermination du second système de couleur dominante sur la base des secondes valeurs de couleur comprend :
déterminer (S807), à partir d'une carte de couleurs, des secondes couleurs associées qui sont associées aux secondes valeurs de couleur des pixels dans la zone cible ; et
déterminer (S808) le second système de couleur dominante sur la base du nombre d'associations réussies entre chaque seconde couleur associée et les secondes valeurs de couleur des pixels dans la zone cible.

6. Procédé selon la revendication 1,
dans lequel le procédé d'effacement comprend l'un des suivants :
un procédé de remplissage de couleur dans la zone cible, un procédé de floutage de la zone cible, et un procédé d'ajout d'un masque de QR code à la zone cible ; dans lequel le masque de QR code est un QR code ayant les mêmes paramètres que le QR code d'origine, mais ayant un contenu différent de celui du QR code d'origine.

7. Procédé selon la revendication 6, dans lequel, dans le cas où le procédé d'effacement est le procédé de remplissage de couleur dans la zone cible, les paramètres comprennent des premiers paramètres, et les premiers paramètres comprennent le premier système de couleur dominante d'autres zones de l'image autres que la zone cible, la réalisation (S602) du processus d'effacement sur la zone cible sur la base des paramètres en adoptant le procédé d'effacement comprend :
réaliser (S811) un remplissage de couleur sur la zone cible à l'aide du premier système de couleur dominante.

8. Procédé selon la revendication 6, dans lequel, dans le cas où le procédé d'effacement est le procédé de floutage de la zone cible, les paramètres comprennent des seconds paramètres, et les seconds paramètres comprennent le second système de couleur dominante de la zone cible, la réalisation (S602) du processus d'effacement sur la zone cible sur la base des paramètres en adoptant le procédé d'effacement comprend :
déterminer (S812) le second système de couleur dominante dans la zone cible en tant que couleur de référence à utiliser dans le procédé de floutage de la zone cible, et réaliser le processus d'effacement sur la zone cible sur la base de la couleur de référence.

9. Procédé selon la revendication 6, dans lequel le procédé d'effacement est le procédé d'ajout d'un masque de QR code à la zone cible, les paramètres comprennent les seconds paramètres, et les seconds paramètres comprennent au moins un parmi : le second système de couleur dominante de la zone cible, des attributs d'une icône centrale du QR code et un rapport de tolérance aux défauts du QR code, la réalisation (S602) du processus d'effacement sur la zone cible basé sur les paramètres en adoptant le mode d'effacement comprend au moins l'un parmi :
afficher (S701 ; S813) un masque de QR code dans la zone cible, dans lequel le contenu du masque de QR code est nul ou des informations d'invite de sécurité, de préférence, le masque de QR code, sont générées à l'aide d'une bibliothèque QRcode en langage Python, d'une bibliothèque MyQR ou d'une bibliothèque QRCode.js en langage JavaScript ;
établir (S702 ; S814) le second système de couleur dominante comme couleur pour le masque de QR code ;
établir (S703 ; S815) l'icône centrale du QR code comme icône centrale du masque de QR code et établir la taille de l'icône centrale du masque de QR code qui est la même que la taille de l'icône centrale dans les seconds paramètres via un fichier de configuration ou une base de données de configuration basé sur une interface graphique utilisateur, GUI, de configuration ; et
établir (S704 ; S816) un rapport de tolérance aux défauts du masque de QR code sur la base du rapport de tolérance aux défauts du QR code via le fichier de configuration ou la base de données de configuration sur la base de la GUI de configuration.

10. Dispositif électronique, comprenant :
au moins un processeur ; et
une mémoire couplée en communication audit au moins un processeur ; dans lequel,
la mémoire stocke des instructions exécutables par le au moins un processeur, lorsque les instructions sont exécutées par le au moins un processeur, le au moins un processeur est configuré pour mettre en œuvre le procédé selon l'une des revendications 1 à 9.

11. Support de stockage non transitoire lisible par ordinateur sur lequel sont stockées des instructions informatiques, dans lequel les instructions informatiques sont configurées pour amener un ordinateur à mettre en œuvre le procédé selon l'une des revendications 1 à 9.

12. Produit de programmes informatiques comprenant des programmes informatiques, dans lequel, lorsque les programmes informatiques sont exécutés par un processeur, le procédé selon l'une des revendications 1 à 9 est mis en œuvre.
